(19) Europäisches Patentamt
European Patent Office
Office européen des brevets

(11) **EP 1 233 504 A2**

(12) **EUROPEAN PATENT APPLICATION**

(43) Date of publication:
**21.08.2002 Bulletin 2002/34**

(51) Int Cl.⁷: **H02M 3/07**

(21) Application number: **02002206.7**

(22) Date of filing: **29.01.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.01.2001 JP 2001023995**

(71) Applicant: **NEC CORPORATION**
**Tokyo (JP)**

(72) Inventor: **Katsuzawa, Mitsuyuki**
**Minato-ku, Tokyo (JP)**

(74) Representative: **Glawe, Delfs, Moll & Partner**
**Patentanwälte**
**Postfach 26 01 62**
**80058 München (DE)**

(54) **Power circuit free from deadlock**

(57)     A pulse generator (11) produces pulse trains (CK91- CK93) from a low power voltage (VDD), and supplies the pulse trains (CK91- CK93) to a level shifter 12 and an auxiliary level shifter (14) so that pulse trains (Ckl to CK3) as high as a high power voltage (VLCD) and auxiliary pulse trains (CK21 to CK23) in-phase to the pulse trains (CK1 to CK3) are supplied to a first switching circuit (10) and a second switching circuit (20) connected in parallel between a boosting condenser (30) and accumulating condensers (31/ 31/33); electric charges are selectively transferred between the boosting condenser (30) to the accumulating condensers (31/ 32/ 33) for boosting the low power voltage (VDD) to the high power voltage (VLCD); even when deadlock takes place in the level shifter (12) due to undesirable potential drop of the high power voltage (VLCD), the second switching circuit (20) makes the boosting condenser (30) continuously boost the low power voltage (VDD) so as to immediately recover the level shifter (12) from the deadlock.

Fig. 7

Printed by Jouve, 75001 PARIS (FR)

## Description

FIELD OF THE INVENTION

This invention relates to a power circuit and, more particularly, to a power circuit such as, for example, a booster for increasing the potential level of electric power.

DESCRIPTION OF THE RELATED ART

An electronic device usually requires plural electric power sources different in potential level from one another. A handy-phone is, by way of example, provided with a liquid crystal display panel, and a driving circuit produces pictures and character images on the liquid crystal display panel. The driving circuit forms a part of a built-in microcomputer system, and requires a power voltage different in potential level from the power voltage distributed to other components of the built-in microcomputer system. The power voltage for the other components is from 3 volts to 5 volts. On the other hand, the power voltage between 8 volts and 15 volts is required for the driving circuit of the liquid crystal display panel. Thus, the power voltage for the driving circuit is higher in potential level than the power voltage distributed to the other components. The high power voltage is generated inside the handy-phone. A booster is incorporated in the handy-phone, and the low power voltage is internally boosted to the high power voltage.

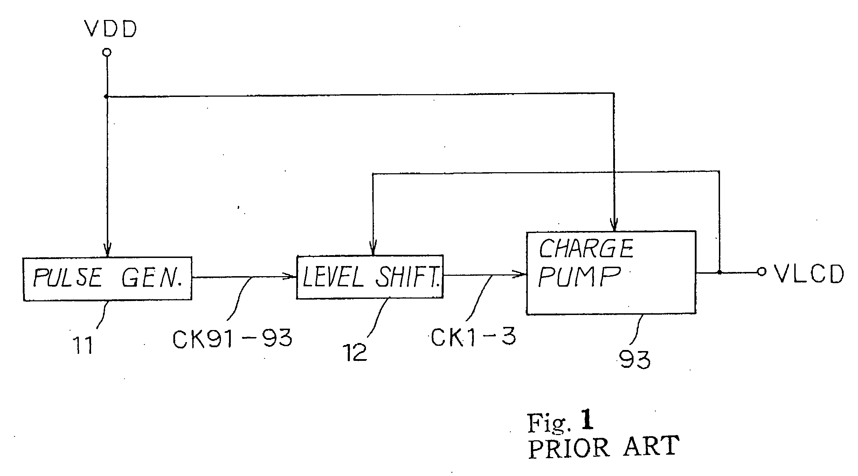

Low power consumption is an important technical goal of the handy-phone. The other components of the microcomputer system are presently powered with 1.5 volts. The high power voltage is to be boosted from 1.5 volts. Figure 1 shows the circuit configuration of the prior art booster. Although the low power voltage VDD at 1.5 volts is boosted to the high power voltage VLCD in the above potential range, the high power voltage VLCD is assumed to be 3 volts in the following description for the sake of simplicity.

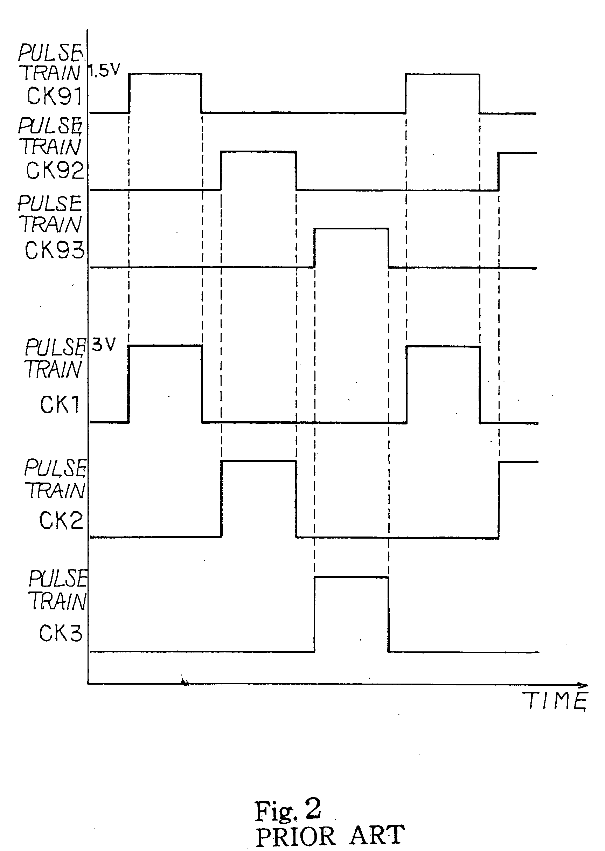

The prior art booster largely comprises a pulse generator 11, a level shifter 12 and a charge-pump circuit 93. The low power voltage VDD is supplied to the pulse generator 11 and the charge-pump circuit 93. The pulse generator 11 is connected to the level shifter 12, and supplies pulse trains CK91 — CK93 to the input nodes of the level shifter 12. The pulse trains CK91— CK93 are as high in potential level as the low power voltage VDD. However, the pulse trains CK91- CK93 are different in phase from one another (see figure 2). The pulse train CK92 rises after the pulse train CK91 is decayed, and the next pulse train CK93 rises after the pulse train CK92 is decayed. The pulse train CK91 rises after the pulse train CK93 is decayed. Thus, the pulse trains CK91 - CK93 are never overlapped with one another.

The output nodes of the level shifter 12 is connected to the control nodes of the charge pump circuit 93, and the output node of the charge pump circuit 93 is connected to another input node of the level shifter 12. The charge pump circuit 93 boosts the low power voltage VDD to the high power voltage VLCD under the control with pulse trains CK1 — CK3 supplied from the level shifter 12. The high power voltage VLCD is supplied to the driver circuit (not shown), and is fed back to the level shifter 12. The level shifter 12 changes the high level of the pulse trains CK91 — CK93 from 1.5 volts to 3 volts, and produces the pulse trains CK1 — CK3. The pulse trains CK1— CK3 are also different in phase from one another, and are never overlapped as shown in figure 2.

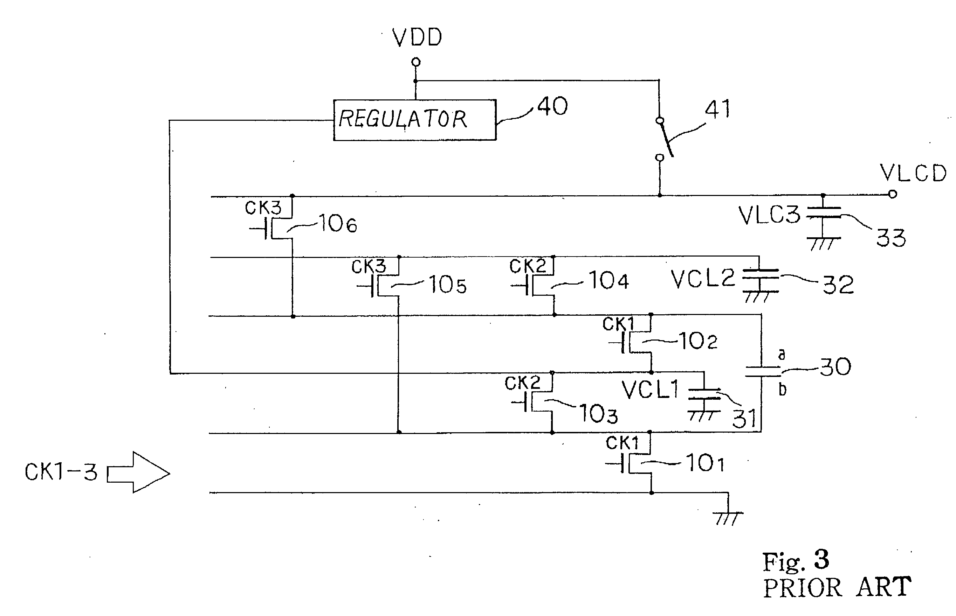

Figure 3 shows the circuit configuration of the charge pump circuit 93. The charge pump circuit 93 comprises a regulator 40, a switching unit 41, switching field effect transistors $10_1$ — $10_6$ and condensers 30 — 33. The low power voltage VDD is supplied to the regulator 40 and the switching unit 41. The regulator 40 produces a constant voltage from the low power voltage VDD. In this instance, the constant voltage is 1 volt. The switching field effect transistors $10_1$ — $10_6$ forms a switching network, and the condensers 30 — 33 are selectively connected through the switching network. The switching unit 41 turns on at the initiation of the boosting operation, and the condenser 33 is charged to the low power voltage VDD. The pulse trains CK1 — CK3 are selectively supplied to the gate electrodes of the switching field effect transistors $10_1$ — $10_6$. When the pulse trains CK1 — CK3 rise to the high level, the associated switching field effect transistors $10_1$ — $10_6$ turn on, and relay the potential level between the source nodes and the drain nodes. The switching field effect transistors $10_1$ — $10_6$ turn off at the pulse decay of the associated pulse trains CK1 — CK3. Thus, the switching field effect transistors $10_1$ — $10_6$ are selectively changed between the on-state and off-state in response to the pulse trains CK1 — CK3 so as to connect and disconnect the condensers 30 — 33, and high voltages VCL1, VCL2 and VCL3 are generated through the boosting operation as will be described hereinafter in detail.

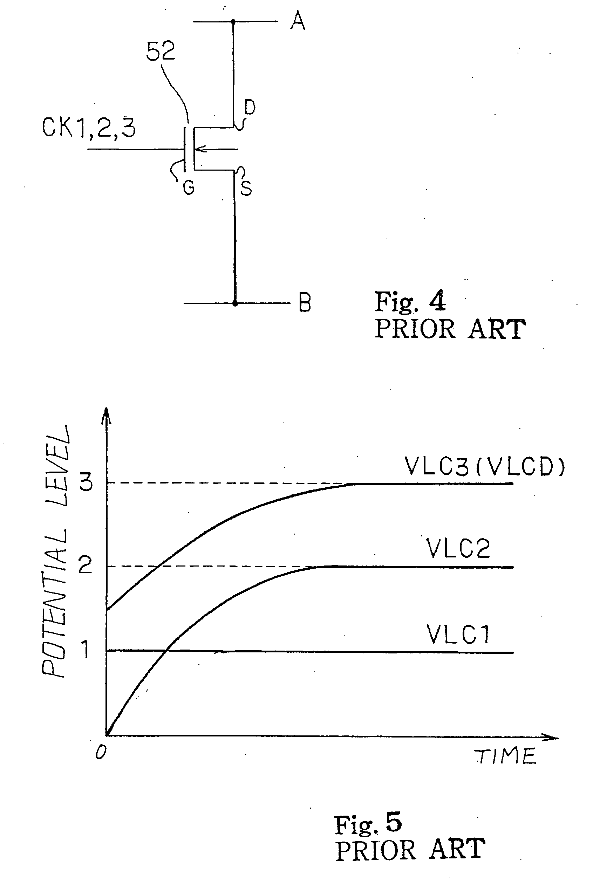

Figure 4 shows the switching field effect transistors $10_1$ — $10_6$. An n-channel enhancement type field effect transistor 52 stands for each of the switching field effect transistors $10_1$ — $10_6$. The n-channel enhancement type field effect transistor 52 has a gate electrode G, a drain node D and a source node S. The pulse train CK1, CK2 or CK3 is supplied to the gate electrode G, and voltage lines A and B are connected to the drain node D and the source node S, respectively. When the pulse train CK1 causes the n-channel enhancement type field effect transistor 52 to produce a conductive channel between the source node S and the drain node D, the voltage lines B is electrically connected to the voltage line A, and the potential level on the voltage line B is propagated through the conductive channel to the voltage line A. When the pulse train CK1, CK2 or CK3 vacates the conductive channel from between the source node S and the drain node D, the voltage line A is electrically isolated from the voltage line B. Thus, the n-channel enhancement type field effect transistor 52 serves as a switch.

Description is hereinbelow made on the circuit behavior. Before the boosting operation, the switching unit 41 is open, and the condensers 32 and 33 are at the ground level. The regulator 40 outputs the voltage level of 1 volt, and supplies the output voltage to the upper electrode of the condenser 31. "VLC1", "VLC2" and "VLC3" are indicative of the potential levels at the upper electrodes of the condensers 31, 32 and 33.

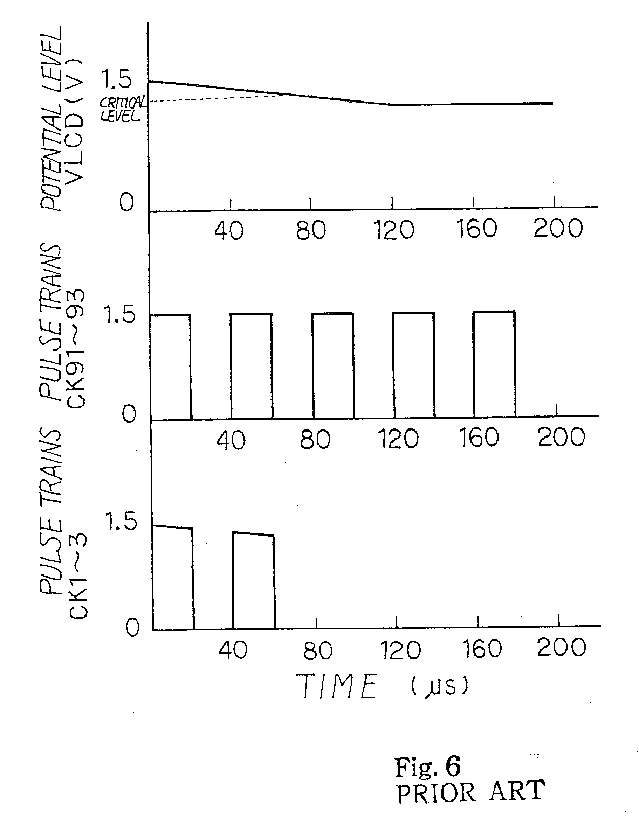

First, the switching unit 41 turns on. Then, the low power voltage VDD is propagated through the switching unit 41 to the upper electrode of the condenser 33, and the upper electrode of the condenser 33 is charged to the low power voltage VDD (see figure 5). The low voltage level VDD is fed back to the level shifter 12. The switching field effect transistors $10_1$ to $10_6$ are still turned off, and the regulator 40 keeps the output voltage at 1 volt.

When the boosting operation starts, the switching unit 41 turns off, and the pulse train CK1 is changed to the high level. Then, the switching field effect transistors $10_1$ to $10_2$ turn on, and the switching field effect transistors $10_1$ to $10_2$ propagate the ground level and the output voltage of the regulator 40 to the lower electrode b and the upper electrode a of the condenser 30. As a result, the condenser 31 raises the potential level at the upper electrode toward 1 volt as shown in figure 5. The pulse train CK1 is decayed, and the switching field effect transistors $10_1$ to $10_2$ turn off. Thus, the output voltage of the regulator 40 is stored in the condenser 30.

The pulse train CK2 rises to the high level. Then, switching field effect transistors $10_3$ to $10_4$ turn on. The output voltage of the regulator 40 is propagated through the switching field effect transistor $10_3$, and the regulator 40 raises the lower electrode b from ground level to the output voltage thereof. Then, the potential level at the upper electrode a is boosted, and the boosted voltage is propagated through the switching field effect transistor $10_4$ to the upper electrode of the condenser 32. The condenser 32 starts to raise the potential level VCL2 to the boosted potential level. The pulse train CK2 is decayed, and the switching field effect transistors $10_3$ to $10_4$ turn off. The boosted potential level is stored in the condenser 32.

The clock train CK3 is changed to the high level, and the switching field effect transistors $10_5$ to $10_6$ turn on. The boosted potential level is propagated from the upper electrode of the condenser 32 through the switching field effect transistor $10_5$ to the lower electrode b of the condenser 30, and the condenser 30 boosts the potential level at the upper electrode a, again. The still boosted potential level is propagated from the upper electrode a through the switching field effect transistor $10_6$ to the upper electrode of the condenser 33, and the upper electrode of the condenser 33 rises from the low power voltage VDD to the still boosted potential level. The potential level at the upper electrode, i.e., the still boosted potential level is fed back to the level shifter 12, and the level shifter 12 raises the high level of the pulse trains CK1 to CK3. The pulse train Ck3 is decayed, and the switching field effect transistors $10_5$ and $10_6$ turn off. Then, the still boosted potential level is stored in the condenser 33.

The above-described boosting operation is repeated, and the potential levels VLC1, VLC2 and VLC3 are gradually increased as shown in figure 5. Finally, the potential levels VLC1, VLC2 and VLC3 reach 1 volt, 2 volts and 3 volts.

However, a program is encountered in the prior art booster in poor stability. The level shifter 12 produces the pulse train Ck1 to CK3 from the pulse train CK91 to CK93, and adjusts the high level of the pulse train CK1 to CK3 to the still boosted potential level, i.e., VLC3 and VLCD. However, if the potential level VLC3 is undesirably dropped under the critical level, the level shifter 12 stops the pulse trains CK1 to CK3, and enters the deadlock. The critical level is, by way of example, 1.2 volts. Figure 6 illustrates the deadlock. The potential level VLCD becomes lower than the critical level before 80 μs, and the deadlock takes place in the level shifter 12. Although the pulse trains CK91 to CK93 are continuously supplied to the level shifter 12, the level shifter 12 stops the pulse trains CK1 to CK3.

One of the causes of the deadlock is external noise on the power supply line for the high power voltage VLCD, and another cause is leakage of electric charge from the condenser 33. If the boosting operation starts before reaching the stable output level, i.e., 1 volt, the deadlock takes place, because the low power voltage VDD is discharged from the upper electrode of the condenser 33 through the switching field effect transistor $10_6$ at the pulse rise of the pulse train CK3. When the deadlock takes place, the prior art booster is to restart the boosting operation. In case, where the prior art booster is incorporated in the driving circuit for the liquid crystal display panel, the liquid crystal display panel can not produce the picture and character images.

As described hereinbefore, the manufacturers concentrate the efforts on the liquid crystal display units driven with a lower power voltage VLCD. The lower the power voltage VLCD, the smaller the margin to the critical level. This means that the deadlock is much liable to take place in the level shifter 12. On the other hand, if the manufacturers keep the margin between the power voltage VLCD and the critical level large, the manufacturers still suffer from the great power consumption of the liquid crystal display unit.

SUMMARY OF THE INVENTION

It is therefore an important object of the present invention to provide a booster, which is stable on the condition that the margin between the boosted voltage level and the critical level is small.

To accomplish the object, the present invention proposes to parallelize an auxiliary switching circuit to a regular switching circuit in a charge pump circuit so as to make a level shifter recovered from the deadlock with a high power voltage produced in response to an auxiliary set of pulse trains.

In accordance with one aspect of the present invention, there is provided a power circuit for producing a first voltage from a second voltage more stable than the first voltage comprising a source of pulse trains for producing a first multi-phase pulse signal, a level shifter connected to the source of pulse trains, supplied with the first voltage and producing a second multi-phase pulse signal changed between a first level and a second level approximately equal to the first voltage from the first multi-phase pulse signal and a charge pump circuit supplied with the second voltage and including a boosting condenser, plural accumulating condensers and a first switching circuit connected between the boosting condenser and the accumulating condensers and responsive to the second multi-phase pulse signal for selectively connecting the boosting condenser to the accumulating condenser so that the first voltage is produced from the second voltage; the power circuit further comprises a delay circuit connected to the source of pulse trains and introducing a time lag for producing a third multi-phase pulse signal in-phase to the second multi-phase pulse signal, and the charge-pump circuit further includes a second switching circuit connected in parallel to the first switching circuit between the boosting condenser and the accumulating condensers and responsive to the third multi-phase pulse signal for selectively connecting the boosting condenser to the accumulating condensers.

BRIEF DESCRIPTION OF THE DRAWINGS

The features and advantages of the booster will be more clearly understood from the following description taken in conjunction with the accompanying drawings in which:

Figure 1 is a circuit diagram showing the circuit configuration of the prior art booster;
Figure 2 is a diagram showing the waveforms of the pulse trains generated in the prior art booster;
Figure 3 is a circuit diagram showing the circuit configuration of the charge pump circuit incorporated in the prior art booster;
Figure 4 is a view showing the n-channel enhancement type field effect transistor serving as each switching field effect transistor in the prior art charge pump circuit;
Figure 5 is a diagram showing the potential levels at the upper electrodes of the condensers information in the prior art booster;

Figure 6 is a diagram showing the pulse trains and the potential level at the deadlock of the level shifter;
Figure 7 is a block diagram showing the circuit configuration of a booster according to the present invention;
Figure 8 is a circuit diagram showing the circuit configuration of a charge pump circuit incorporated in the booster according to the present invention;
Figure 9 is a graph showing the potential level on voltage lines in recovery from the deadlock;
Figure 10 is a circuit diagram showing the circuit configuration of a transfer gate used in another booster according to the present invention;
Figure 11 is a circuit diagram showing the circuit configuration of a parallel circuit used in yet another booster according to the present invention;
Figure 12 is a circuit diagram showing the circuit configuration of a parallel circuit used in still another booster according to the present invention;
Figure 13 is a view showing the symbol of a non-doped field effect transistor used in still another booster according to the present invention; and
Figure 14 is a circuit diagram showing the circuit configuration of a parallel circuit used in yet another booster according to the present invention.

DESCRIPTION OF THE PREFERRED EMBODIMENTS

First Embodiment

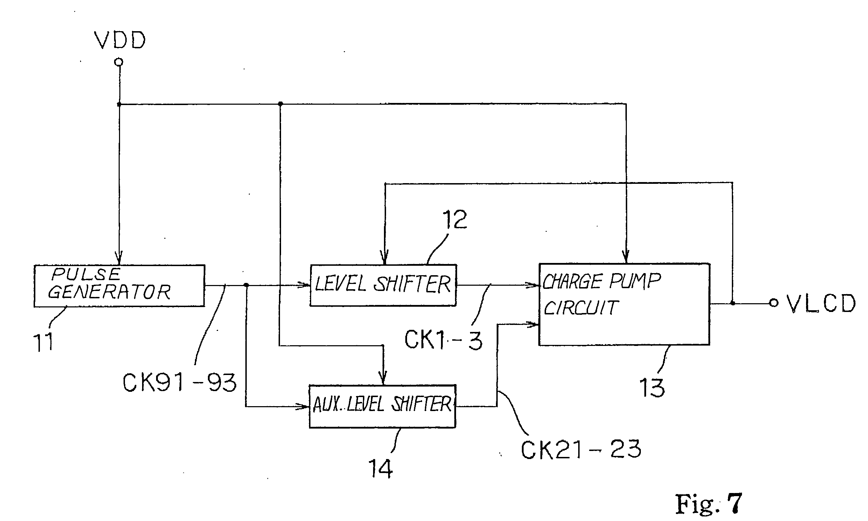

Referring to figure 7 of the drawings, a booster embodying the present invention largely comprises a pulse generator 11, a level shifter 12, an auxiliary level shifter 14 and a charge pump circuit 13. The low power voltage VDD is supplied to the auxiliary level shifter 14 as well as the pulse generator 11 and charge pump circuit 13, and the level shifter 12 is powered with a high power voltage VLCD. The low power voltage VDD is, by way of example, generated from the domestic electric power, and is much more stable than the high power voltage VLCD.

The pulse generator 11 generates pulse trains CK91 to CK93 from the low power voltage VDD, and supplies the pulse trains Ck91 to CK93 to both of the level shifter 12 and the auxiliary level shifter 14. The pulse generator 11 changes the potential levels of the pulse trains CK91 to CK93 between a low level and a high level, and the high level is approximately equal to the low power voltage VDD. The pulse trains CK91 to CK93 are never overlapped with one another. In this instance, the pulse trains CK91 to CK93 have a pulse height of 1.5 volts.

The level shifter 12 is similar to that incorporated in the prior art booster. The level shifter 12 is responsive to the pulse trains CK91 to CK93 so as to produce pulse trains CK1 to CK3. The level shifter 12 changes the high level of the pulse trains Ck1 to CK3 from the low power voltage VDD to the high power voltage VLCD, and supplies the pulse trains CK1 to CK3 to the charge pump circuit 13. A time lag is introduced between the pulse trains CK91 to CK93 and the pulse trains CK1 to CK3. The pulse trains Ck1 to CK3 are never overlapped with one another.

The auxiliary level shifter 14 is also responsive to the pulse trains Ck91 to CK93 so as to produce auxiliary pulse trains CK21 to CK23. The pulse trains Ck21 to CK23 have the high level approximately equal to the low power voltage level VDD. Accordingly, the pulse trains CK21 to CK23 have the pulse height approximately equal to 1.5 volts. The auxiliary level shifter 14 is expected to introduce the time lag into the propagation of the pulse trains, i.e., between the pulse trains CK91 to CK93 and the pulse trains CK21 to CK23. In other words, the auxiliary level shifter 14 introduces the time lag as long as the time lag unavoidably introduced by the level shifter 12. This means that the auxiliary level shifter 14 makes the pulse trains CK21 to CK23 inphase to the pulse trains CK1 to CK3. Thus, the auxiliary level shifter 14 is incorporated in the booster for the sake of synchronism between the pulse trains CK1 to CK3 and the pulse trains CK21 to CK23. In this instance, the auxiliary level shifter 14 is similar in circuit configuration to the level shifter 12 so that the time lag introduced by the auxiliary level shifter 14 is approximately equal to the time lag unavoidably introduced by the level shifter 12.

The auxiliary level shifter 14 is replaceable with a delay circuit. In other words, the pulse trains CK91 to CK93 are delayed by the delay circuit, and the delayed pulse trains are supplied from the delay circuit to the charge pump circuit 13 as the pulse trains Ck21 to CK23. Of course, the delay circuit is designed to introduce the time lag as long as the time lag unavoidably introduced by the level shifter 12.

The two sets of pulse trains CK1 to CK3 and CK21 to CK23 are supplied to the charge pump circuit 13, and the charge pump circuit 13 boosts the low power voltage VDD to the high power voltage VLCD in response to the pulse trains CK1 to CK3 or CK21 to CK23.

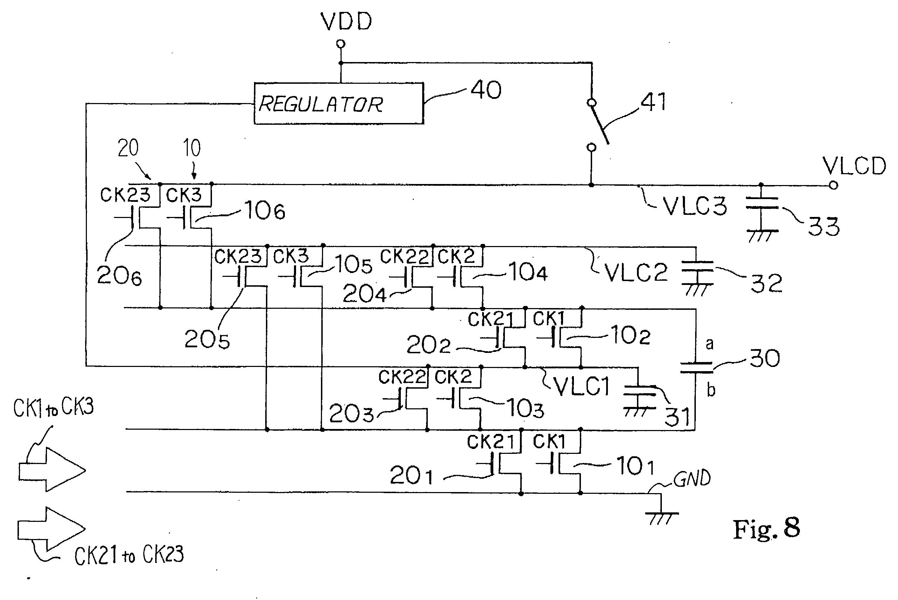

Figure 8 shows the circuit configuration of the charge pump circuit 13. The charge pump circuit 13 includes a boosting condenser 30, accumulating condensers 31, 32 and 33, a regular switching circuit 10 connected between the boosting condenser 30 and the accumulating condensers 31, 32 and 3, an auxiliary switching circuit 20 also connected between the boosting condenser 30 and the accumulating condensers 31, 32 and 33, a regulator 40 and a switching unit 41. The set of pulse trains CK1 to CK3 is supplied to the regular switching circuit 10, and the other set of pulse trains CK21 to CK23 is supplied to the auxiliary switching circuit 20. The auxiliary switching circuit 20 is the difference between the charge pump circuit 93 and the charge pump circuit 13.

The low power voltage VDD is supplied to the regulator 40 and the switching unit 41. The regulator 40 produces a stable output voltage from the low power voltage VDD, and the stable output voltage is lower than the low power voltage VDD. The accumulating condensers 31, 32 and 33 have respective accumulating electrodes and respective counter electrodes. The counter electrodes are grounded, and the accumulating electrodes are connected to voltage lines VLC1, VLC2 and VLC3, respectively. The voltage line VLC1 is connected to the output node of the regulator 40, and the accumulating condenser 31 is charged with the stable output voltage of the regulator 40.

On the other hand, the boosting condenser 30 has two electrodes a and b, which are selectively connected to the accumulating electrodes of the accumulating condensers 31, 32 and 33. The two electrodes a/b are selectively connected through the regular switching circuit 10 or auxiliary switching circuit 20 to the voltage lines VLC1/ VLC2/ VLC3 and the ground line GND.

The regular switching circuit 10 is implemented by switching field effect transistors $10_1$ to $10_6$. The switching field effect transistors $10_1$ to $10_6$ are similar to those of the prior art booster (see figure 4). The switching field effect transistors $10_1$ to $10_6$ are connected between the electrode b and the ground line GND, between the voltage line VLCD1 and the electrode a, between the voltage line VLC1 and the electrode b, between the electrode a and the voltage line VLC2, between the electrode b and the voltage line VLC2 and between the electrode a and the voltage line VLC3, respectively. The pulse trains Ck1, Ck2 and CK3 are supplied to the gate electrodes of the switching field effect transistors $10_1$ and $10_2$, the gate electrodes of the switching field effect transistors $10_3$ and $10_4$ and the gate electrodes of the switching field effect transistors $10_5$ and $10_6$, respectively.

The auxiliary switching circuit 20 is also implemented by switching field effect transistors $20_1$ to $20_6$, and the switching transistors $20_1$ to $20_6$ are of the n-channel enhancement type shown in figure 4. The switching field effect transistors $20_1$ to $20_6$ are connected in parallel to the switching field effect transistors $10_1$ to $10_6$. Namely, the switching field effect transistors $20_1$ to $20_6$ are connected between the electrode b and the ground line GND, between the voltage line VLCD1 and the electrode a, between the voltage line VLC1 and the electrode b, between the electrode a and the voltage line VLC2, between the electrode b and the voltage line VLC2 and between the electrode a and the voltage line VLC3, respectively. The pulse trains Ck21, Ck22 and CK23 are supplied to the gate electrodes of the switching field effect transistors $20_1$ and $20_2$, the gate electrodes of the switching field effect transistors $20_3$ and $20_4$ and the gate electrodes of the switching field effect transistors $20_5$ and $20_6$, respectively. As described hereinbefore, the pulse trains CK21 to CK23 are in-phase to the pulse trains CK1 to CK3, respectively. The pulse trains CK21 to Ck23 and CK1 to CK3 cause the switch-

ing field effect transistors $20_1$ and $20_2$ to turn on and off concurrently with the switching field effect transistors $10_1$ and $10_2$, respectively.

The switching unit 41 is connected between the source of low power voltage VDD and the voltage line VLC3, and is momentarily closed at the initiation of the boosting operation.

The regulator 40 is assumed to charge the accumulating condenser 31 with the stable output voltage. First, the switching unit 41 turns on. Then, the low power voltage VDD is propagated through the switching unit 41 to the accumulating electrode of the condenser 33, and the low power voltage VDD is stored in the accumulating condenser 33. The switching field effect transistors $10_1$ to $10_6$ and $20_1$ to $20_6$ are turned off, and the low voltage level VDD is fed back to the level shifter 12.

When the boosting operation starts, the switching unit 41 turns off, and the pulse trains CK1 and CK21 are changed to the respective high levels. Then, the switching field effect transistors $10_1$ and $10_2$ and $20_1$ and $20_2$ turn on, and the switching field effect transistors $10_1$, $20_1$ and $10_2$, $20_2$ propagate the ground level and the stable output voltage to the electrode b and the electrode a of the boosting condenser 30. As a result, the accumulating condenser 31 raises the potential level at the electrode a toward the stable output voltage. The pulse trains CK1 and CK21 are decayed, and the switching field effect transistors $10_1$ and $10_2$ and the switching field effect transistors $20_1$ and $20_2$ turn off. The stable output voltage is stored in the accumulating condenser 30.

Subsequently, the pulse trains CK2 and CK22 rise to the respective high levels. Then, switching field effect transistors $10_3$ and $10_4$ and the switching field effect transistors $20_3$ and $20_4$ turn on. The stable output voltage is propagated from the voltage line VLC1 through the switching field effect transistors $10_3$ and $20_3$ to the electrode b, and raises the potential level at the electrode b from ground level to the stable output voltage. Then, the potential level at the electrode a is boosted, and the boosted voltage is propagated through the switching field effect transistors $10_4$ and $20_4$ and the voltage line VLC2 to the accumulating electrode of the condenser 32. The pulse trains CK2 and CK22 are decayed, and the switching field effect transistors $10_3$ /$10_4$ and $20_3$/ $20_4$ turn off. Thus, the boosted potential level is stored in the condenser 32.

Subsequently, the clock trains CK3 and CK23 are changed to the respective high levels, and the switching field effect transistors $10_5$/ $10_6$ and switching field effect transistors $20_5$/ $20_6$ turn on. The boosted potential level is propagated from the accumulating electrode of the condenser 32 through the switching field effect transistors $10_5$ and $20_5$ to the electrode b of the boosting condenser 30, and the boosting condenser 30 boosts the potential level at the other electrode a, again. The still boosted potential level is propagated from the electrode a through the switching field effect transistors

$10_6$ and $20_6$ to the accumulating electrode of the condenser 33, and the boosting condenser 30 raises the potential level at the accumulating electrode of the condenser 33 from the low power voltage VDD to the still boosted potential level. The potential level at the accumulating electrode, i.e., the still boosted potential level is fed back to the level shifter 12, and the level shifter 12 raises the high level of the pulse trains CK1 to CK3. The pulse trains Ck3 and CK23 are decayed, and the switching field effect transistors $10_5$ and $10_6$ and the switching transistors $20_1$ and $20_6$ turn off. Then, the still boosted potential level is stored in the condenser 33.

The above-described boosting operation is repeated, and the potential levels on the voltage lines VLC1, VLC2 and VLC3 are gradually increased as similar to those in the prior art booster. When the potential level on the voltage lines VLC2/ VLC3 and the electrode b exceeds a certain potential level higher than the high level of the pulse trains CK21 to CK23 by the threshold of the switching field effect transistors $20_1$ to $20_6$, the switching field effect transistors $20_1$ to $20_6$ do not respond to the pulse trains CK21 to CK23, and the potential levels on the voltage lines VLC2/ VLC3 and the electrode b keep the switching field effect transistors $20_1$ to $20_6$ in the off-state. Only the electric charges are replayed through the switching field effect transistors $10_1$ to $10_6$. Thus, the booster produces the high power voltage VLCD from the low power voltage VDD in the absence of the undesirable potential drop.

Assuming now that the high power voltage VLCD is undesirably dropped to 1.1 volts, the high power voltage VLCD is lower than the critical level of the level shifter 12, i.e., 1.2 volts, and the deadlock takes place. However, the potential drop does not have any influence on the auxiliary level shifter 14. The auxiliary level shifter 14 still generates the pulse trains CK21 to CK23, and supplies them to the auxiliary switching circuit 20.

When the pulse train CK21 is changed to the high level, the switching field effect transistors $20_1$ and $20_2$ turn on, and replays the ground level and the stable output voltage to the electrodes b/ a of the boosting condenser 30, respectively, and, thereafter, the electric charges are replayed between the accumulating condensers 32/ 33 and the boosting condenser 30 in response to the pulse trains CK22 and CK23. The boosting operation is repeated, and the boosting condenser 30 gradually raises the potential levels on the voltage lines VLC1/ VLC2/ VLC3.

When the high power voltage VLCD exceeds the critical level, the level shifter 12 restarts the generation of the pulse trains CK1 to CK3, and supplies them to the regular switching circuit 10. The switching field effect transistors $10_1$ to $10_6$ participate the boosting operation, again, and the electric charges are replayed between the boosting condenser 30 to the accumulating condensers 32/ 33 through the switching field effect transistors $10_1$ to $10_6$ as well as the switching field effect transistors $20_1$ to $20_6$.

The potential level on the voltage lines VLC2/ VLC3 and the electrode b exceed the certain potential level higher than the high level of the pulse trains CK21 to CK23 by the threshold. Then, the switching field effect transistors $20_1$ to $20_6$ do not respond to the pulse trains CK21 to CK23, and only the switching field effect transistors $10_1$ to $10_6$ participate the boosting operation.

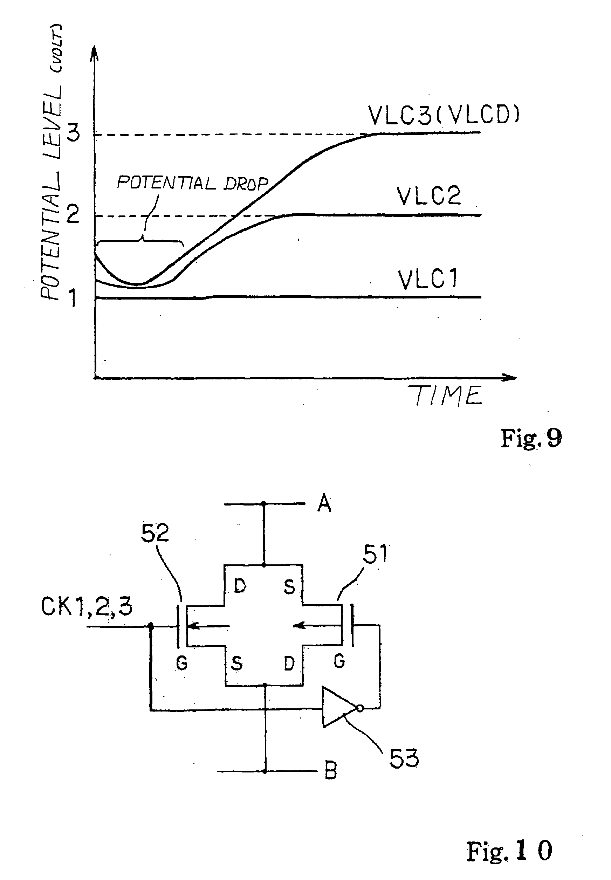

Figure 9 shows the recovery from the deadlock. The low power voltage VDD, the high power voltage VLCD and the stable output voltage of the regulator 40 are assumed to be 1.5 volts, 3 volts and 1 volt, respectively. When the deadlock takes place, the level shifter 12 stops the pulse trains CK1 to CK3, and the potential level on the voltage line VLC3 is decayed. However, the auxiliary switching circuit 20 keeps the boosting operation. The potential levels on the voltage lines VLC2/ VLC3 are recovered from the potential drop.

As will be understood from the foregoing description, the two sets of pulse trains CK1 to CK3 and CK21 to CK23 are supplied from the level shifters 12/14 to the associated switching circuits 10/ 20 for the boosting operation in the charge pump 13. While the charge pump circuit 13 is supplying the high power voltage over the critical level to the level shifter 12, the auxiliary level shifter 14 and the associated switching circuit 20 are redundant. However, even when the level shifter 12 stops the pulse trains Ck1 to CK3 due to the deadlock, the auxiliary level shifter 14 continuously supplies the pulse trains CK21 to CK23 to the switching circuit 20, and the boosting condenser 30 and the accumulating condensers 31 to 33 continues the boosting operation. This results in that the level shifter 12 is recovered from the deadlock so as to restart the pulse trains CK1 to CK3. Thus, the auxiliary level shifter 14 and the switching circuit 20 enhances the stability of the high power voltage VLCD. Even though the manufacturers reduces the margin between the high power voltage VLCD and the critical level, the booster according to the present invention stably continues the generation of the high power voltage VLCD.

The stability is achieved by adding only the delay circuit, i.e., the auxiliary level shifter 14 and the switching circuit 20 to the prior art booster. The auxiliary level shifter 14 and the switching circuit 20 merely occupy narrow area on a semiconductor chip, and the increased area is ignoreable. Thus, the manufacturers enhance the stability of the booster without sacrifice of the semiconductor chip.

Second Embodiment

Another booster embodying the present invention also largely comprises a pulse generator, a level shifter, a delay circuit, i.e., an auxiliary level shifter and a charge pump circuit. The pulse generator, the level shifter and the delay circuit are similar to the pulse generator 11, the level shifter 12 and the auxiliary level shifter 14, respectively, and no further description is incorporated hereinbelow.

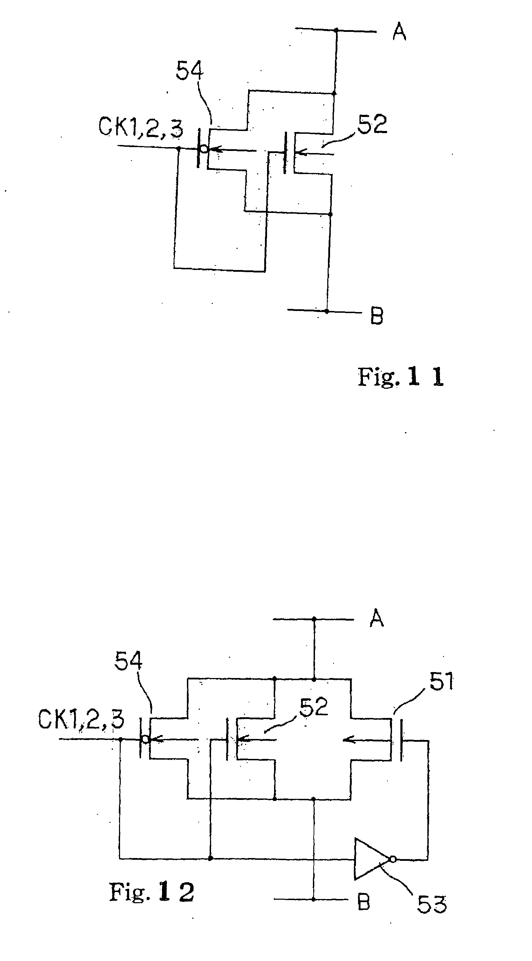

The charge pump circuit is similar in circuit configuration to the charge pump circuit 13, and includes a boosting condenser, accumulating condensers and two switching circuits arranged in parallel to each other. The two switching circuits are implemented by transfer gates, parallel combinations of a p-channel enhancement type field effect transistor 51 and an n-channel enhancement type field effect transistor 52 accompanied with an inverter 53 shown in figure 10 except the switching field effect transistor $20_6$. The switching field effect transistor $20_6$ is implemented by the n-channel enhancement type field effect transistor. This is because of the fact that the high power voltage VLCD on the voltage line VLC3 does not permit the p-channel enhancement type field effect transistor 51 to turn off in the presence of the complementary pulse train of the high level.

If the p-channel enhancement type field effect transistor 51 has a small threshold, the n-channel enhancement type field effect transistors may be used as the switching field effect transistors $20_1$ to $20_5$. In other words, the transfer gates are used for the switching field effect transistors in so far as the transfer gates are surely changed between the on-state and the off-state.

Furthermore, the p-channel enhancement type field effect transistor 51 may be replaced with two p-channel enhancement type field effect transistors 51 coupled in series in the switching field effect transistor $20_4$, by way of example. In the p-channel enhancement type field effect transistor 51, the back gate or the n-type well is to be connected to the source or drain region higher in potential level than the other. The switching field effect transistor $20_4$ is connected between the voltage line VLC2 and the electrode a. The electrode a is selectively connected to the voltage line VLC1 and the voltage line VLC3, and the source region becomes higher or lower than the drain region. In other words, it is impossible to determine which region is higher than the other region. The back gates of the p-channel enhancement type field effect transistors are respectively connected to the regions opposite to the common region shared therebetween. Any malfunction does not take place in the series of p-channel enhancement type field effect transistors. Thus, there are several limitations on the usage of the p-channel enhancement type field effect transistor 51.

The parallel combination is connected between voltage lines A and B, and the pulse train CK1/ CK2/ CK3 or CK21/ CK22/ CK23 and the complementary pulse trains are supplied from the level shifter 12 and the inverter 53 to the gate electrode of the n-channel enhancement type field effect transistor 52 and the gate electrode of the p-channel enhancement type field effect transistor 51, respectively. When the pulse train rises to the high level, the complementary pulse train is decayed, and both of the n-channel enhancement type field effect transistor 52 and the p-channel enhancement type field effect transistor 51 concurrently turn on.

On the other hand, when the pulse train is decayed to the high level, the complementary pulse train rises, and both of the n-channel enhancement type field effect transistor 52 and the p-channel enhancement type field effect transistor 51 concurrently turn off. The voltage lines A and B stand for the voltage lines VLC1/ VCL2/ VCL3, the ground line GND and the voltage lines connected to the electrodes a/ b.

The booster implementing the second embodiment behaves similar to the booster shown in figures 7 and 8, and achieves all the advantages of the first embodiment. The transfer gate is lower in channel resistance than the n-channel enhancement type field effect transistor, and, accordingly, relays the potential level between the boosting condenser 30 and the accumulating condensers 31/ 32/ 33 without potential drop.

Third embodiment

Yet another booster embodying the present invention also largely comprises a pulse generator, a level shifter, a delay circuit, i.e., an auxiliary level shifter and a charge pump circuit. The pulse generator, the level shifter and the delay circuit are similar to the pulse generator 11, the level shifter 12 and the auxiliary level shifter 14, respectively, and no further description is incorporated hereinbelow.

The charge pump circuit is similar in circuit configuration to the charge pump circuit 13, and includes a boosting condenser, accumulating condensers and two switching circuits arranged in parallel to each other. The two switching circuits are implemented by parallel circuits shown in figure 11 except the switching field effect transistors $10_1$ and $20_1$. The parallel circuit consists of an n-channel enhancement type field effect transistor 52 and an n-channel non-doped field effect transistor 54 coupled in parallel to each other. The parallel circuit 52/ 54 is connected between the voltage lines A and B, and the pulse train CK1/ CK2/ CK3 or CK21/ CK22/ CK23 is supplied to the gate electrode of the n-channel non-doped field effect transistor 54 as well as the gate electrode of the n-channel enhancement type field effect transistor 52.

The n-channel enhancement type field effect transistor 52 is fabricated through a process including a channel doping with n-type dopant impurity. The n-channel enhancement type field effect transistor has a certain threshold greater than zero. However, the n-channel non-doped field effect transistors are fabricated through a process without the channel doping. For this reason, the n-channel non-doped field effect transistors have a threshold of the order of zero. The n-channel non-doped field effect transistor reduces the channel resistance of the parallel circuit. As described hereinbefore, the switching transistors $10_1$ and $20_1$ are implemented by the n-channel enhancement type field effect transistors. If the switching transistors $10_1$ and $20_1$ are also implemented by the parallel circuits, the voltage line connected to the electrode b is electrically connected through the n-channel non-doped field effect transistors to the ground line GND at all times, and the boosting condenser 30 can not boosts the potential level.

The booster implementing the third embodiment behaves as similar to the first embodiment, and achieves all the advantages. The parallel circuits 52/54 reduces the resistance between the voltage lines A and B, and accelerates the boosting operation.

Fourth Embodiment

Still another booster embodying the present invention also largely comprises a pulse generator, a level shifter, a delay circuit, i.e., an auxiliary level shifter and a charge pump circuit. The pulse generator, the level shifter and the delay circuit are similar to the pulse generator 11, the level shifter 12 and the auxiliary level shifter 14, respectively, and no further description is incorporated hereinbelow.

The charge pump circuit is similar in circuit configuration to the charge pump circuit 13, and includes a boosting condenser, accumulating condensers and two switching circuits arranged in parallel to each other. The two switching circuits are implemented by parallel circuits shown in figure 12 except the switching field effect transistors $10_1$, $20_1$ and $20_6$. The parallel circuit consists of the transfer gate, i.e., the parallel combination of the p-channel enhancement type field effect transistor 51, the n-channel enhancement type field effect transistor 52 and the inverter 53 and an n-channel non-doped field effect transistor 54 coupled in parallel to the transfer gate. The p-channel enhancement type field effect transistors 51 are also under the limitations described hereinbefore.

The parallel circuit 51/ 52/ 54 is connected between the voltage lines A and B, and the pulse train CK1/ CK2/ CK3 or CK21/ CK22/ CK23 and the complementary pulse train are supplied to the gate electrodes of the n-channel non-doped/ n-channel enhancement type field effect transistors 54/ 52 and the gate electrode of the as well as the gate electrode of the p-channel enhancement type field effect transistor 51.

The booster implementing the fourth embodiment behaves as similar to the first embodiment, and achieves the advantages of the third embodiment.

Fifth Embodiment

Yet another booster embodying the present invention also largely comprises a pulse generator, a level shifter, a delay circuit, i.e., an auxiliary level shifter and a charge pump circuit. The pulse generator, the level shifter and the delay circuit are similar to the pulse generator 11, the level shifter 12 and the auxiliary level shifter 14, respectively, and no further description is incorporated hereinbelow.

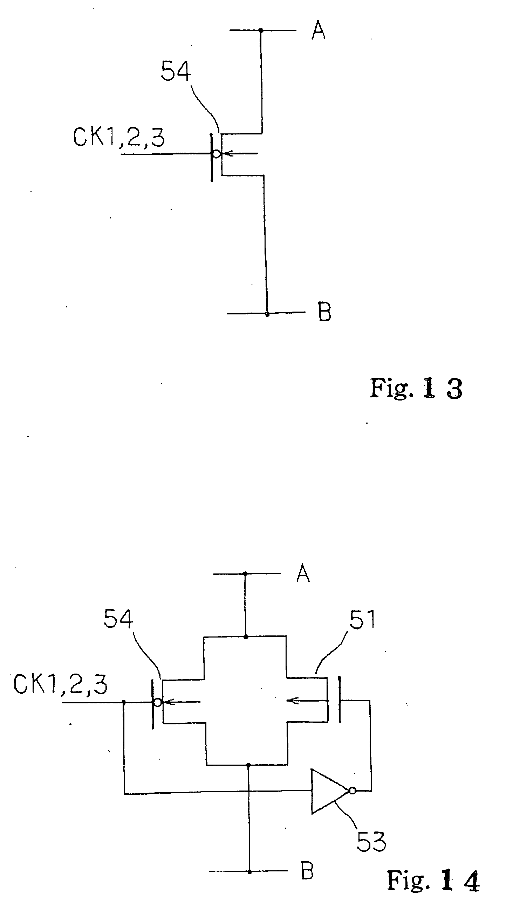

The charge pump circuit is similar in circuit configuration to the charge pump circuit 13, and includes a boosting condenser, accumulating condensers and two switching circuits arranged in parallel to each other. The two switching circuits are implemented by n-channel non-doped field effect transistors 54 shown in figure 13 except the switching field effect transistors $10_1$ and $20_1$. The booster behaves as similar to the first embodiment. The n-channel non-doped field effect transistors 54 achieves a high-speed switching action without sacrifice of the simple circuit configuration of the switching circuits 10/ 20.

Sixth Embodiment

Still another booster embodying the present invention also largely comprises a pulse generator, a level shifter, a delay circuit, i.e., an auxiliary level shifter and a charge pump circuit. The pulse generator, the level shifter and the delay circuit are similar to the pulse generator 11, the level shifter 12 and the auxiliary level shifter 14, respectively, and no further description is incorporated hereinbelow.

The charge pump circuit is similar in circuit configuration to the charge pump circuit 13, and includes a boosting condenser, accumulating condensers and two switching circuits arranged in parallel to each other. The two switching circuits are implemented by parallel circuits shown in figure 14 except the switching field effect transistors $10_1$, $20_1$ and $20_6$. The parallel circuit consists of a p-channel enhancement type field effect transistor 51, an n-channel non-doped field effect transistor 54 and an inverter 53. The p-channel enhancement type field effect transistor 51 is also under the limitations described hereinbefore.

The p-channel enhancement type field effect transistor 51 and the n-channel non-doped field effect transistor 54 are in parallel to each other, and are connected between the voltage lines A and B. The pulse train CK1/ CK2/ CK3 or CK21/ CK22/ CK23 is supplied to the gate electrode of the n-channel non-doped field effect transistor 54 and the inverter 53, and the inverter 53 supplies the complementary pulse train to the gate electrode of the p-channel enhancement type field effect transistor 51.

The booster implementing the sixth embodiment behaves as similar to the first embodiment, and achieves the advantages of the third embodiment.

As will be appreciated from the foregoing description, the auxiliary switching circuit 20 is connected in parallel to the regular switching circuit between the boosting condenser 30 and the accumulating condensers 31/ 32/ 33, and the switching transistors of the auxiliary switching circuit are gated by the pulse trains Ck21 to CK23 produced from the stable power voltage. Even when the level shifter 12 stops the pulse trains CK1/ CK2/ CK3 due to the deadlock, the auxiliary switching circuit continuously relays the electric charges between the boosting condenser 30 and the accumulating condensers 31/ 32/ 33 so that the charge pump circuit 13 makes the high power voltage VLCD recovered from the undesirable potential drop. Thus, the level shifter 12 is immediately recovered from the deadlock, and the booster according to the present invention stably supplies the high power voltage to a destination such as the driver circuit of the liquid crystal display panel. Even when the manufacturers lower the high power voltage, the booster according to the present invention is stable and free from the deadlock.

Although particular embodiments of the present invention have been shown and described, it will be apparent to those skilled in the art that various changes and modifications may be made without departing from the spirit and scope of the present invention.

For example, the charge pump circuit 13 may have more than three stages, i.e., more than three accumulating condensers. In this instance, the regular switching circuit and the auxiliary switching circuit consist of switching field effect transistors greater than those of the first embodiment.

The low power voltage VDD and the high power voltage VLCD are never limited to 1.5 volts and 3 volts. The present invention is applicable to any booster for producing a high voltage from a low voltage.

The booster according to the present invention is applicable to any kind of electric or electronic system. In other words, the application field is not limited to the liquid crystal display unit.

The regulator may selectively supply plural stable voltages to the accumulating condenser. The charge pump circuit may step up or step down the voltage depending upon the stable voltage supplied thereto. The booster according to the present invention may produce a stable voltage as high as the power voltage supplied thereto.

Selected ones of the switching field effect transistors may be implemented by p-channel enhancement type field effect transistors.

Finally, any kind of delay circuit is available for the booster or power circuit in so far as the output pulse trains are in-phase to the pulse trains of the level shifter.

**Claims**

1. A power circuit for producing a first voltage (VLCD) from a second voltage (VDD) more stable than said first voltage, comprising:

   a source of pulse trains (11) for producing a first multi-phase pulse signal (Ck91- CK93);
   a level shifter (12) connected to said source of pulse trains (11), supplied with said first voltage (VLCD), and producing a second multi-phase pulse signal (CK1 - CK3) changed between a first level and a second level approximately equal to said first voltage (VLCD) from said first multi-phase pulse signal (CK91 - CK93); and a charge pump circuit (13) supplied with said second voltage (VDD), and including a boosting condenser (30), plural accumulating condensers (31/ 32/ 33) and a first switching circuit (10) connected between said boosting condenser (30) and said accumulating condensers (31/ 32/ 33) and responsive to said second multi-phase pulse signal (CK1- CK3) for selectively connecting said boosting condenser (30) to said accumulating condenser (31/ 32/ 33) so that said first voltage (VLCD) is produced from said second voltage (VDD), **characterized by** further comprising

a delay circuit (14) connected to said source of pulse trains (11), and introducing a time lag for producing a third multi-phase pulse signal (CK21-CK23) in-phase to said second multi-phase pulse signal (CK1 - CK3), <u>and in that</u> said charge-pump circuit (13) further includes a second switching circuit (20) connected in parallel to said first switching circuit (10) between said boosting condenser (30) and said accumulating condensers (31/ 32/ 33) and responsive to said third multi-phase pulse signal (CK21/ CK22/ CK23) for selectively connecting said boosting condenser (30) to said accumulating condensers (31/ 32/ 33).

2. The power circuit as set forth in claim 1, in which said charge pump circuit boosts said second voltage (VDD) to said first voltage (VLCD) so that said first voltage is higher than said second voltage.

3. The power circuit as set forth in claim 1, in which said charge pump circuit (13) further includes a regulator (40) having an input node supplied with said second voltage (VDD) and an output node connected to one of said accumulating condensers (31) for supplying a stable voltage thereto, and a switching unit (41) connected between a source of said second voltage (VDD) and another of said accumulating condensers (33) for supplying said second voltage (VDD) to said another of said accumulating condensers (33) at an initial stage of an operation realized therein.

4. The power circuit as set forth in claim 3, in which said stable voltage is lower than said second voltage (VDD), and said charge pump circuit (13) boosts the second voltage (VDD) to said first voltage (VLCD) through the boosting operation in the boosting condenser (30).

5. The power circuit as set forth in claim 1, in which another level shifter (14) similar in circuit configuration to said level shifter serves as said delay circuit.

6. The power circuit as set forth in claim 1, in which said first switching circuit (10) has first switching elements ($10_1$ - $10_6$) selectively supplied with first pulse trains (Ck1/ CK2/ CK3) of said second multi-phase pulse signal and equal in number to second switching elements ($20_1$ - $20_6$) of said second switching circuit (20) selectively supplied with second pulse trains (CK21/ CK22/ CK23) of said third multi-phase pulse signal, and the first switching elements ($10_1$ - $10_6$) are respectively paired with said second switching elements ($20_1$ - $20_6$).

7. The power circuit as set forth in claim 6, in which said first and second switching elements are implemented by n-channel enhancement type field effect transistors (52), respectively.

8. The power circuit as set forth in claim 6, in which said first and second switching elements are selectively implemented by n-channel enhancement type field effect transistors (52) and transfer circuits each having an n-channel enhancement type field effect transistor (52), a p-channel enhancement type field effect transistor (51) connected in parallel to said n-channel enhancement type field effect transistor (52) and an inverter (53) producing a pulse train complementary to the first or second pulse train supplied to said n-channel enhancement type field effect transistor for supplying said pulse train to said p-channel enhancement type field effect transistor.

9. The power circuit as set forth in claim 6, in which said first and second switching elements are selectively implemented by an n-channel enhancement type field effect transistor (52) with a certain threshold greater than zero and n-channel type non-doped field effect transistors (54) with a threshold approximately equal to zero, and the first pulse train or second pulse train is supplied to a gate electrode (G) of said n-channel enhancement type field effect transistor (52) and a gate electrode (G) of said n-channel type non-doped field effect transistor (54).

10. The power circuit as set forth in claim 7, in which each of said first and second switching elements further has an n-channel type non-doped field effect transistor (54) with a threshold approximately equal to zero connected in parallel to said n-channel enhancement type field effect transistor (52), and the first pulse train or second pulse train is supplied to a gate electrode (G) of said n-channel enhancement type field effect transistor (52) and a gate electrode (G) of said n-channel type non-doped field effect transistor (54).

11. The power circuit as set forth in claim 8, in which each of said transfer circuit further has an n-channel type non-doped field effect transistor (54) with a threshold approximately equal to zero connected in parallel to said n-channel enhancement type field effect transistor (52), and said first pulse train or second pulse train is supplied to a gate electrode (G) of the n-channel type non-doped field effect transistor (54).

**12.** The power circuit as set forth in claim 6, in which said first and second switching elements are selectively implemented by n-channel enhancement type field effect transistors (52) and parallel circuits each having a p-channel enhancement type field effect transistor (51), an n-channel type non-doped field effect transistor (54) connected in parallel to said p-channel enhancement type field effect transistor (51) and an inverter (53) producing a pulse train complementary to the first pulse train or second pulse train supplied to a gate electrode of said n-channel type non-doped field effect transistor for supplying said pulse train to a gate electrode of said p-channel enhancement type field effect transistor.

Fig. 1
PRIOR ART

VDD

PULSE GEN.   11

CK91-93

LEVEL SHIFT.   12

CK1-3

CHARGE PUMP   93

VLCD

Fig. 2
PRIOR ART

VLCD

VLC3 33

VCL2 32

a 30

b

104 102 CK1 31

CK2 VCL1

105 103 CK1 101

CK3 106

CK3

REGULATOR 40

VDD

41

CK2

CK1—3

Fig. 3
PRIOR ART

Fig. 4
PRIOR ART

Fig. 5
PRIOR ART

Fig. 6
PRIOR ART

Fig. 7

EP 1 233 504 A2

Fig. 8

Fig. 9

Fig. 1 0

Fig. 11

Fig. 12

Fig. 1 3

Fig. 1 4